(19) Europäisches Patentamt
European Patent Office
Office européen des brevets

(11) **EP 4 195 180 B1**

(12) **FASCICULE DE BREVET EUROPEEN**

(45) Date de publication et mention de la délivrance du brevet:
**30.10.2024  Bulletin 2024/44**

(21) Numéro de dépôt: **22212031.3**

(22) Date de dépôt: **07.12.2022**

(51) Classification Internationale des Brevets (IPC):
**G01T 1/02** *(2006.01)*    **G01T 7/00** *(2006.01)*
**G09B 23/20** *(2006.01)*    **G09B 9/00** *(2006.01)*

(52) Classification Coopérative des Brevets (CPC):
**G09B 9/00; G01T 1/02; G01T 7/00; G09B 9/003;
G09B 23/20**

(54) **DISPOSITIF DE SIMULATION D'UN ENVIRONNEMENT EXPOSE A DES RADIATIONS ET/OU CONTAMINE PAR DES COMPOSANTS RADIOACTIFS**

VORRICHTUNG ZUR SIMULATION EINER VON RADIOAKTIVEN KOMPONENTEN KONTAMINIERTEN UMGEBUNG

DEVICE FOR SIMULATING AN ENVIRONMENT EXPOSED TO RADIATION AND/OR CONTAMINATED BY RADIOACTIVE COMPONENTS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.12.2021  FR 2113078**

(43) Date de publication de la demande:
**14.06.2023  Bulletin 2023/24**

(73) Titulaire: **Electricité de France
75008 Paris (FR)**

(72) Inventeur: **BERT, Didier
01150 LAGNIEU (FR)**

(74) Mandataire: **Regimbeau
20, rue de Chazelles
75847 Paris Cedex 17 (FR)**

(56) Documents cités:
**US-A- 2 900 740      US-A- 4 917 611
US-A1- 2014 323 157   US-A1- 2019 101 658**

**EP 4 195 180 B1**

## Description

### DOMAINE DE L'INVENTION

L'invention concerne un dispositif de simulation d'un environnement exposé à des radiations et/ou contaminé par des composants radioactifs.

### ETAT DE LA TECHNIQUE

Les opérateurs qui travaillent dans des environnements susceptibles d'être exposés à des radiations et/ou dans les environnements susceptibles d'être contaminés par des composants radioactifs, doivent être munis d'équipements individuels de radioprotection.

Ces équipements individuels de radioprotection incluent non seulement des vêtements de protection assurant une fonction de barrière aux rayonnements ionisants et aux matières radioactives, mais également des appareils de mesure individuels permettant la recherche de sources de contamination, le contrôle d'ambiance et la mesure des rayonnements ionisants reçus par l'opérateur.

Ces appareils de mesure individuels comprennent typiquement un dosimètre (c'est-à-dire un appareil permettant de mesurer une valeur de débit de dose de radiations), un radiamètre (c'est-à-dire un appareil permettant de mesurer une valeur de dose de radiation), et/ou un contaminamètre (c'est-à-dire un appareil permettant de mesurer une contamination radioactive sur une surface donnée).

Cependant, avant d'autoriser un opérateur à travailler dans un environnement exposé à des radiations et/ou contaminé par des composants radioactifs, il est nécessaire de former cet opérateur afin qu'il apprenne à utiliser correctement les équipements individuels de protection et qu'il connaisse les procédures à suivre en cas de danger.

Pour qu'un opérateur soit formé de manière efficace, il serait souhaitable de placer l'opérateur dans des conditions les plus proches des conditions réelles, y compris dans des situations de danger. Toutefois, dans le même temps, il est également souhaitable de limiter au maximum les risques pour la santé de l'opérateur. r

US2019101658 A1 décrit un système et une méthode connus de l'art antérieur et permettant de simuler un dosimètre.

### RESUME DE L'INVENTION

Un but de l'invention est de proposer un dispositif de simulation permettant de reproduire des conditions réelles d'un environnement exposé à des radiations et/ou contaminé par des composants radioactifs, afin de pouvoir entrainer de manière efficace des opérateurs devant travailler dans ce type d'environnement.

Selon un premier aspect, ce but est atteint dans le cadre de la présence invention, grâce à un dispositif de simulation d'un environnement exposé à des radiations et/ou contaminé par des composants radioactifs, comprenant :

- une balise destinée à simuler une source de radiations ou une zone contaminée, la balise comprenant un émetteur radiofréquence propre à émettre un signal d'identification radiofréquence avec une première portée, le signal radiofréquence, le signal d'identification radiofréquence contenant un identifiant de la balise, et un générateur de champ magnétique propre à générer un champ magnétique avec une deuxième portée, inférieure à la première portée, et

- un terminal utilisateur destiné à simuler un appareil de mesure individuel, le terminal utilisateur comprenant un récepteur radiofréquence propre à recevoir le signal d'identification émis par l'émetteur, un détecteur de champ magnétique propre à détecter le champ magnétique, et un microprocesseur configuré pour calculer une distance entre le terminal utilisateur et la balise en fonction du signal d'identification reçu, et

dans lequel le microprocesseur est configuré pour :

- comparer la distance calculée entre le terminal utilisateur (130) et la balise (140) avec un seuil prédéfini, et

- si la distance calculée entre le terminal utilisateur et la balise est supérieure à un seuil prédéfini, calculer une valeur de débit de dose de radiations simulé reçu par un utilisateur porteur de l'appareil de mesure individuel, en fonction d'une valeur de radiations attribuée à la source de radiations ou à la zone contaminée, et de la distance calculée entre le terminal utilisateur et la balise, et

- si la distance calculée entre le terminal utilisateur et la balise est inférieure ou égale au seuil prédéfini, calculer une valeur de débit de dose de radiations simulé reçu par l'utilisateur porteur de l'appareil de mesure individuel, en fonction du champ magnétique détecté par le détecteur de champ magnétique.

Avec un tel dispositif, chaque utilisateur peut être muni d'un terminal utilisateur simulant un dosimètre. Le terminal utilisateur permet de simuler un fonctionnement proche de celui d'un dosimètre réel, puisqu'il permet de calculer un débit de dose de radiations simulé à la fois lorsque l'utilisateur se trouve loin de la source de radiations ou de la zone contaminée, et lorsque l'utilisateur se trouve proche de la source de radiations ou de la zone contaminée.

Le dispositif de simulation peut en outre présenter les caractéristiques suivantes :

- si la distance calculée entre le terminal utilisateur et la balise est supérieure au seuil prédéfini, le microprocesseur calcule la valeur de débit de dose de radiations simulé comme inversement proportionnelle au carré de la distance entre le terminal utilisateur et la balise ;

- si la distance calculée entre le terminal utilisateur et la balise est inférieure ou égale au seuil prédéfini, le microprocesseur calcule la valeur de débit de dose de radiations simulé, comme une première valeur constante prédéfinie ;
- si la distance calculée entre le terminal utilisateur et la balise est nulle, le microprocesseur calcule la valeur de débit de dose de radiations simulé, comme une deuxième valeur constante prédéfinie ;
- le signal d'identification radiofréquence émis par l'émetteur radiofréquence de la balise est émis selon un protocole de communication Ultra Large Bande ;
- le dispositif comprend en outre un serveur comprenant une mémoire dans laquelle est stockée la valeur de radiations attribuée à la source de radiations ou à la zone contaminée, et un émetteur radiofréquence, propre à émettre un signal radiofréquence de paramétrage à destination du terminal utilisateur, le signal radiofréquence de paramétrage contenant la valeur de radiations attribuée à la source de radiations ou à la zone contaminée ;
- le dispositif comprend un terminal administrateur comprenant une interface par laquelle un administrateur peut saisir la valeur de radiation attribuée à la source de radiations ou à la zone contaminée, et un émetteur radiofréquence propre à émettre un signal radiofréquence de mise à jour à destination du serveur, le signal radiofréquence de mise à jour contenant la valeur de radiations attribuée à la source de radiations ou à la zone contaminée, pour enregistrement dans la mémoire du serveur ;
- le terminal utilisateur comprend une horloge, et le microprocesseur du terminal utilisateur est configuré pour calculer une pluralité de valeurs de débit de dose de radiations simulé reçu par l'utilisateur, chaque valeur de débit de dose de radiations étant associée à un instant de mesure donné par l'horloge, et pour calculer une valeur de dose de radiation simulée reçue par l'utilisateur porteur de l'appareil de mesure individuel, en fonction des valeurs de débit de dose de radiations et des instants de mesure associés ;
- le dispositif comprend une pluralité de balises simulant une pluralité de sources de radiations ou de zones contaminées, chaque balise comprenant un émetteur radiofréquence propre à émettre un signal d'identification radiofréquence identifiant la balise, et un générateur de champ magnétique propre à générer un champ magnétique, et le microprocesseur est configuré pour calculer une distance entre le terminal utilisateur et chaque balise en fonction du signal d'identification reçu de la balise, et pour calculer une valeur de débit de dose de radiations simulé totale reçu par l'utilisateur, comme une somme des valeurs de débit de dose de radiations simulé calculées pour les différentes balises ;
- le terminal utilisateur comprend un écran d'affichage et le microprocesseur est configuré pour commander l'écran d'affichage pour que l'écran d'affichage affiche la valeur de débit de dose de radiations simulé et/ou la valeur de dose de radiation simulée reçu par l'utilisateur ;
- le terminal utilisateur comprend une alarme propre à émettre un signal d'alarme lorsque la valeur de débit de dose de radiations simulé et/ou la valeur de dose de radiation simulée reçu par l'utilisateur dépasse une valeur d'alarme prédéfinie.

Selon un deuxième aspect, l'invention concerne un dispositif de simulation d'un environnement exposé à des radiations et/ou contaminé par des composants radioactifs, comprenant :

- une radio-étiquette destinée à simuler une source de radiations ou une zone contaminée,
- un terminal utilisateur destiné à simuler un appareil de mesure individuel, le terminal utilisateur comprenant un émetteur propre à émettre un signal d'activation à destination de la radio-étiquette, un récepteur propre à recevoir un signal d'identification émis par la radio-étiquette en réponse au signal d'activation, le signal d'identification contenant un identifiant de la radio-étiquette ou une valeur de contamination associée à la radio-étiquette, et un microprocesseur configuré pour déterminer une valeur de contamination, en fonction de l'identifiant de la radio-étiquette.

Le dispositif de simulation peut en outre présenter les caractéristiques suivantes :

- le signal d'identification émis par la radio-étiquette est un signal RFID ;
- le dispositif comprend en outre un serveur comprenant une mémoire dans laquelle est stockée la valeur de contamination attribuée à la source de radiations ou à la zone contaminée, et un émetteur radiofréquence, propre à émettre un signal radiofréquence de paramétrage à destination du terminal utilisateur, le signal radiofréquence de paramétrage contenant la valeur de contamination attribuée à la source de radiations ou à la zone contaminée ;
- le dispositif comprend un terminal administrateur comprenant une interface par laquelle un administrateur peut saisir la valeur de contamination attribuée à la source de radiations ou à la zone contaminée, et un émetteur radiofréquence propre à émettre un signal radiofréquence de mise à jour à destination du serveur, le signal radiofréquence de mise à jour contenant la valeur de contamination attribuée à la source de radiations ou à la zone contaminée, pour enregistrement dans la mémoire du serveur ;
- le dispositif comprend une pluralité de radio-étiquettes simulant une pluralité de sources de radiations ou de zones contaminées, chaque radio-étiquette étant propre à émettre un signal d'identification en réponse au signal d'activation émis par le terminal utilisateur, le signal d'identification contenant un identifiant de la radio-étiquette ;

-   le terminal utilisateur comprend un écran d'affichage et le microprocesseur est configuré pour commander l'écran d'affichage pour que l'écran d'affichage affiche la valeur de contamination attribuée à la source de radiations ou à la zone contaminée.

## PRESENTATION DES DESSINS

D'autres caractéristiques et avantages ressortiront encore de la description qui suit, laquelle est purement illustrative et non limitative et doit être lue en regard des figures annexées, parmi lesquelles :

-   la figure 1 représente de manière schématique un dispositif de simulation d'un environnement exposé à des radiations et/ou contaminé par des composants radioactifs, conforme à un premier mode de réalisation de l'invention, et
-   la figure 2 représente de manière schématique des étapes d'un premier procédé de simulation, conforme à un mode de mise en oeuvre possible de l'invention,
-   la figure 3 représente de manière schématique un dispositif de simulation d'un environnement exposé à des radiations et/ou contaminé par des composants radioactifs, conforme à un deuxième mode de réalisation de l'invention,
-   la figure 4 représente de manière schématique des étapes d'un deuxième procédé de simulation, conforme à un mode de mise en oeuvre possible de l'invention.

## DESCRIPTION DETAILLEE D'UN MODE DE REALISATION

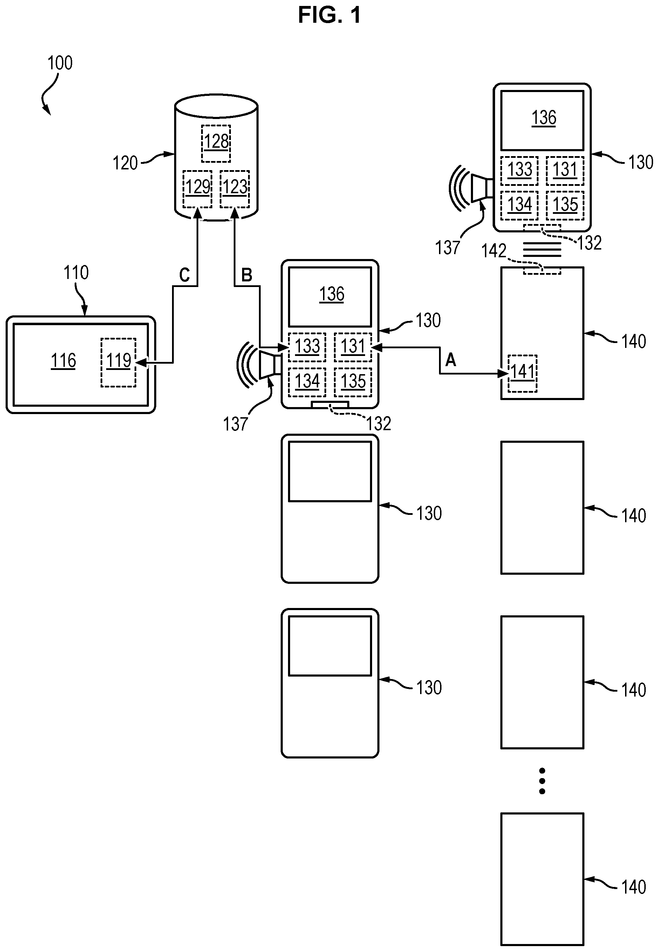

Sur la figure 1, le dispositif de simulation 100 comprend un terminal administrateur 110, un serveur 120, une pluralité de terminaux utilisateur 130 et une pluralité de balises 140.

Les balises 140 peuvent être positionnées en différents endroits d'un local, par exemple une salle de formation reproduisant un local industriel. Chaque balise 140 est destinée à simuler une source de radiations ou une zone contaminée. A cet effet, chaque balise 140 comprend un émetteur radiofréquence 141 propre à émettre un signal d'identification radiofréquence A contenant un identifiant de la balise. L'identifiant peut être un code associé de manière univoque à la balise. Autrement dit, chaque balise 140 possède un identifiant unique, différent des identifiant des autres balises.

L'émetteur radiofréquence 141 est propre à émettre un signal d'identification radiofréquence A selon un protocole de communication Ultra Large Bande (en anglais « Ultra Wide Band » ou « UWB »). Ce protocole, défini par la norme IEEE802.15.4-2011, est basé sur la transmission d'impulsions de très courte durée, souvent inférieure à la nanoseconde, et sur un large spectre de fréquence.

De plus, chaque balise 140 comprend un générateur de champ magnétique 142 propre à générer un champ magnétique. Le générateur de champ magnétique 142 est distinct de l'émetteur radiofréquence 141. Le générateur de champ magnétique 142 peut inclure par exemple un aimant ou un électroaimant. Le champ magnétique généré par le générateur de champ magnétique est distinct du signal d'identification radiofréquence A.

Chaque terminal utilisateur 130 est destiné à simuler un appareil de mesure individuel, c'est-à-dire un appareil de mesure destiné à être porté par un utilisateur. En particulier, dans l'exemple illustré sur la figure 1, chaque terminal utilisateur 130 est destiné à simuler un dosimètre (c'est-à-dire un appareil permettant de mesurer une valeur de débit de dose de raFdiations) et un radiamètre (c'est-à-dire un appareil permettant de mesurer une valeur de dose de radiation).

A cet effet, chaque terminal utilisateur 130 comprend un premier récepteur radiofréquence 131 propre à recevoir les signaux d'identification émis par les émetteurs 141 des différentes balises 140. Le premier récepteur radiofréquence 131 de chaque terminal utilisateur 130 est propre à recevoir les signaux d'identification radiofréquence selon le protocole de communication Ultra Large Bande.

De plus, chaque terminal utilisateur 130 comprend un détecteur de champ magnétique 132 propre à détecter le champ magnétique généré par le générateur de champ magnétique 142 de chaque balise 140. Le détecteur de champ magnétique 132 peut inclure par exemple un détecteur à effet Hall. Le champ magnétique 142 généré par l'aimant ou l'électroaimant présentant une portée inférieure à la portée avec laquelle est émis le signal d'identification radiofréquence A, le champ magnétique 142 n'est détectable par le détecteur de champ magnétique 132 que lorsque le terminal utilisateur 130 est suffisamment proche de la balise 140.

Chaque terminal utilisateur 130 comprend en outre un deuxième récepteur radiofréquence 133 propre à recevoir un signal radiofréquence de paramétrage émis par le serveur 120. Le deuxième récepteur radiofréquence 133 peut être propre à recevoir un signal de paramétrage radiofréquence selon un protocole de communication WiFi ou Bluetooth.

En outre, chaque terminal utilisateur 130 comprend une horloge 134 propre à mesurer le temps.

De plus, chaque terminal utilisateur 130 comprend un microprocesseur 135 programmé pour mettre en oeuvre des étapes d'un procédé de simulation. En particulier, le microprocesseur 135 est configuré pour calculer une distance entre le terminal utilisateur 130 et chaque balise 140, en fonction du signal d'identification A reçu en provenance de la balise 140. Plus précisément, le microprocesseur 135 est configuré pour calculer la distance entre le terminal utilisateur 130 et la balise 140 par mesure du temps de propagation aller-retour du signal d'identification A entre la balise 140 et le terminal utilisateur 130.

Le protocole de communication Ultra Large Bande permet de généralement de mesurer cette distance avec une précision de l'ordre de 10 centimètres.

De plus, le microprocesseur 135 est également configuré pour calculer une valeur de débit de dose de radiations simulé et une valeur de dose de radiations simulée, en fonction de la distance calculée entre le terminal utilisateur 130 et la balise 140. Ces valeurs de débit de dose de radiations simulé et de dose de radiations simulée correspondent à des valeurs qui seraient reçues par l'utilisateur porteur d'un appareil de mesure individuel (dosimètre, radiamètre), dans un environnement réel exposé à des radiations et/ou contaminé par des composants radioactifs.

Chaque terminal utilisateur 130 comprend en outre un écran d'affichage 136. Le microprocesseur 135 est configuré pour commander l'écran d'affichage 136 pour que l'écran d'affichage 136 affiche la valeur de débit de dose de radiations simulé et/ou la valeur de dose de radiation simulée.

Chaque terminal utilisateur 130 peut également comprendre une alarme 137 propre à émettre un signal d'alarme lorsque la valeur de débit de dose de radiations simulé dépasse une première valeur d'alarme prédéfinie et/ou la valeur de dose de radiation simulée dépasse une deuxième valeur d'alarme prédéfinie. L'alarme peut inclure par exemple un avertisseur sonore ou lumineux. Le microprocesseur 135 est configuré pour commander l'avertisseur sonore ou lumineux pour que l'avertisseur sonore ou lumineux émette un signal sonore ou un signal lumineux lorsque la valeur de débit de dose de radiations simulé dépasse une première valeur d'alarme prédéfinie et/ou la valeur de dose de radiation simulée dépasse une deuxième valeur d'alarme prédéfinie.

Le serveur 120 comprend une mémoire 128 dans laquelle sont stockées une pluralité de valeurs de radiations, chaque valeur de radiation étant attribuée à une source de radiations ou à une zone contaminée simulée par l'une des balises 140. Plus précisément, la mémoire 128 contient les identifiants des différentes balises 140 et pour chaque identifiant, une valeur de radiation associée. La valeur de radiation peut être une valeur de débit de dose de référence attribuée à la balise 140 à une distance de référence de la balise 140. Ainsi, la valeur de débit de dose de référence est une quantité d'énergie ionisante reçue physiquement par unité de masse et par unité de temps à une distance de référence de la source de radiations ou de la zone contaminée. La distance de référence est par exemple égale à 30 centimètres. Dans ce cas, la valeur de débit de dose de référence attribuée à chaque balise 140 peut par exemple être définie en Sievert par unité de temps à 30 centimètres.

La mémoire 128 peut également contenir des valeurs d'alarme de débit de dose de radiations et/ou de dose de radiation.

Le serveur 120 comprend en outre un émetteur radiofréquence 123, propre à émettre un signal radiofréquence de paramétrage B à destination des terminaux utilisateurs 140. Le signal radiofréquence de paramétrage B contient les valeurs de radiations attribuées aux différentes balises 140. Le signal de paramétrage peut B également comprendre les valeurs d'alarme.

L'émetteur radiofréquence 123 du serveur 120 peut être propre à émettre le signal de paramétrage radiofréquence B selon le protocole de communication Wi-Fi ou Bluetooth.

Le serveur 120 comprend en outre un récepteur radiofréquence 129 propre à recevoir un signal radiofréquence de mise à jour C en provenance du terminal administrateur 110.

Le terminal administrateur 110 est destiné à être utilisé par un administrateur du procédé de simulation. Le terminal administrateur 110 comprend une interface par laquelle l'administrateur peut saisir des paramètres de la simulation, tels que :

- les différentes valeurs de radiation attribuées aux différentes sources de radiations ou aux différentes zones contaminées (c'est-à-dire aux différentes balises), et
- les valeurs d'alarme de débit de dose de radiations et/ou de dose de radiation.

Le terminal administrateur 110 peut par exemple comprendre un écran tactile 116 et l'interface peut par exemple comprendre une application enregistrée dans le terminal administrateur 110 permettant d'afficher sur l'écran 116 différents champs dans lesquels l'administrateur peut saisir les différents paramètres de la simulation.

Le terminal administrateur 110 comprend en outre un émetteur radiofréquence 119 propre à émettre le signal radiofréquence de mise à jour C à destination du serveur 120. Le signal radiofréquence de mise à jour C contient les paramètres de la simulation qui ont été saisis par l'administrateur.

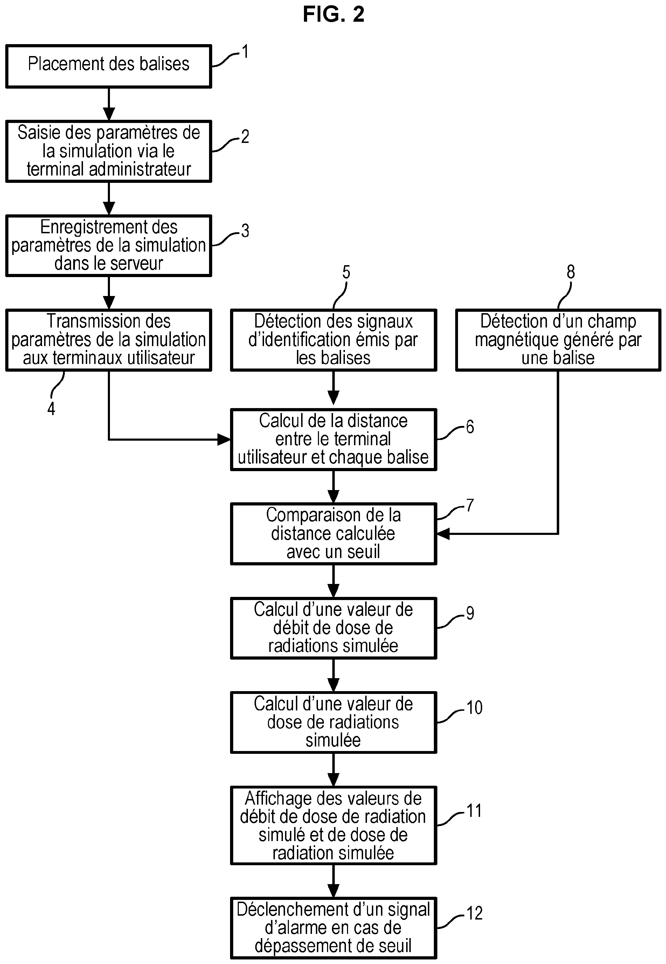

En référence à la figure 2, le procédé de simulation se déroule de la manière suivante.

Selon une première étape 1, l'administrateur dispose les balises 140 en différents endroits du local, et munit chaque utilisateur d'un terminal utilisateur 130.

Selon une deuxième étape 2, l'administrateur saisit les différents paramètres de la simulation au moyen du terminal administrateur 110. Par exemple, pour chaque balise 140, l'administrateur saisit une valeur de radiation associée à la balise 140, et pour chaque terminal utilisateur 130, l'administrateur saisit une valeur d'alarme de débit de dose de radiations et/ou de dose de radiation.

Les valeurs d'alarme de débit de dose de radiations et/ou de dose de radiation peuvent être identiques pour tous les terminaux utilisateur 130.

Alternativement, les paramètres de la simulation peuvent être préenregistrés dans le terminal administrateur 110. Dans ce cas, l'administrateur se contente de valider ou de modifier les paramètres préenregistrés.

Alternativement, plusieurs jeux de paramètres possibles pour la simulation peuvent être préenregistrés dans le terminal administrateur 110. Dans ce cas, l'administrateur sélectionne un jeu de paramètres.

Selon une troisième étape 3, le terminal administrateur 110 communique les paramètres de la simulation au serveur 120. A cet effet, le terminal administrateur 110 émet un signal de mise à jour vers le serveur 120. Le serveur 120 reçoit le signal de mise à jour et enregistre les paramètres de la simulation dans la mémoire 128.

Selon une quatrième étape 4, le serveur 120 émet un signal de paramétrage à destination des terminaux utilisateurs 130. Chaque terminal utilisateur 130 reçoit le signal de paramétrage contenant les paramètres de la simulation.

En parallèle, selon une cinquième étape 5, chaque terminal utilisateur 130 reçoit des signaux d'identification radiofréquence en provenance d'une ou de plusieurs balises 140.

Selon une sixième étape 6, chaque terminal utilisateur 130 calcule une distance entre le terminal utilisateur 130 et chaque balise 140. La distance entre le terminal utilisateur 130 et une balise 140 est calculée en fonction du temps de propagation du signal d'identification entre la balise 140 et le terminal utilisateur 130.

Selon une septième étape 7, chaque terminal utilisateur 130 compare la distance entre le terminal utilisateur 130 et la balise 140 avec un seuil prédéfini.

Lorsque la distance entre le terminal utilisateur 130 et une balise devient inférieure ou égale au seuil prédéfini, le protocole Ultra Large Bande ne permet plus de calculer la distance entre le terminal utilisateur et la balise avec une précision suffisante. Dans ce cas, selon une huitième étape 8, le détecteur de champ magnétique 132 du terminal utilisateur 130 est activé pour pouvoir détecter le champ magnétique généré par le générateur de champ magnétique 142 de la balise 140. En effet, lorsque la distance entre le terminal utilisateur 130 et la balise 140 devient inférieure ou égale au seuil prédéfini, le terminal utilisateur 130 est suffisamment proche de la balise 140 pour que le détecteur de champ magnétique 132 détecte le champ magnétique généré par le générateur de champ magnétique 142 de la balise 140.

Ainsi, la distance entre le terminal utilisateur 130 et la balise 140 est calculée en fonction du champ magnétique détecté par le détecteur de champ magnétique 132 du terminal utilisateur 130.

Le seuil prédéfini peut par exemple être égal à 30 centimètres.

Selon une huitième étape 9, chaque terminal utilisateur 130 calcule une valeur de débit de dose de radiations simulé reçu par l'utilisateur porteur du terminal utilisateur 130. La valeur de débit de dose simulé est calculée par le microprocesseur 135 en fonction de chaque valeur de radiations attribuée à chaque source de radiations ou à chaque zone contaminée (c'est-à-dire à chaque balise 140), et de chaque distance calculée entre le terminal utilisateur 130 et la balise 140. La valeur de débit de dose simulée permet de quantifier le risque instantané auquel est exposé l'utilisateur.

La valeur de débit de dose simulé peut être calculée en Sievert par unité de temps.

Plus précisément, le microprocesseur 135 du terminal utilisateur 130 calcule la valeur de débit de dose simulée comme suit :

- si la distance d2 calculée entre le terminal utilisateur 130 et la balise 140 est supérieure au seuil prédéfini, alors la valeur de débit de dose de radiations simulé $dEd2$ reçu par l'utilisateur est inversement proportionnelle au carré de la distance entre le terminal utilisateur 130 et la balise 140, c'est-à-dire :

$$dEd2 = \frac{dEd1 \times d1^2}{d2^2}$$

où $dEd1$ est la valeur de débit de dose de référence attribuée à la balise 140 à une distance de référence d1, $dEd2$ est la valeur de débit de dose de radiations simulé, et d2 est la distance calculée entre le terminal utilisateur 130 et la balise 140, et

- si la distance d2 calculée entre le terminal utilisateur 130 et la balise 140 est inférieure ou égale au seuil prédéfini, alors la valeur de débit de dose de radiations simulé $dEd2$ reçu par l'utilisateur est calculée en fonction de la valeur du champ magnétique détecté par le détecteur de champ magnétique 132 du terminal utilisateur 130.

La loi définissant la valeur de débit de dose de radiations simulé en fonction de la valeur du champ magnétique détecté peut avoir été déterminée au préalable de manière empirique, à l'aide de mesures réelles réalisées à proximité d'une source de radiations réelle ou d'une zone contaminée réelle. En effet, pour des petites distances, les valeurs de débit de dose de radiations ne sont plus inversement proportionnelles au carré de la distance entre le terminal utilisateur 130 et la balise 140.

Cette loi peut par exemple être définie comme une fonction constante par morceaux. Par exemple, la loi peut être définie de manière simple comme suit :

- si la distance calculée entre le terminal utilisateur 130 et la balise 140 est inférieure ou égale au seuil prédéfini, mais supérieure à 0, le microprocesseur 135 calcule la valeur de débit de dose de radiations simulé, comme étant égale à une première valeur constante prédéfinie, et

- si la distance calculée entre le terminal utilisateur 130 et la balise 140 est nulle, le microprocesseur 135 calcule la valeur de débit de dose de radiations simulé, comme étant égale à une deuxième valeur constante prédéfinie, supérieure à la première valeur constante.

Bien entendu, lorsque le terminal utilisateur 130 détecte plusieurs balises 140, la valeur de débit de dose de radiations simulé est la somme des valeurs de débit de dose de radiations simulé individuelles reçu de la part des différentes balises 140.

Selon une dixième étape 10, chaque terminal utilisateur 130 calcule également une valeur de dose de radiations simulée reçue par l'utilisateur porteur du terminal utilisateur 130. La valeur de dose de radiations simulée est calculée par le microprocesseur 135 en fonction des différentes valeurs de débit de dose de radiations calculées au cours du temps et des instants de mesure associés à chaque valeur de débit de dose de radiations.

La valeur de dose de radiations simulée est une quantité totale d'énergie ionisante reçue physiquement par unité de masse par l'utilisateur. La valeur de dose de radiations simulée permet ainsi que quantifier un effet de cumul d'exposition au risque de l'utilisateur pendant la durée de la simulation.

Ainsi, le microprocesseur 135 du terminal utilisateur 130 calcule la valeur de dose de radiations simulée par intégration du débit de dose simulé en fonction du temps, c'est-à-dire :

$$ D = \int dEd2 \times dt $$

où *D* est la dose de radiation simulée, *dEd2* est le débit de dose simulé, et *t* est le temps.

La valeur de dose de radiations simulée peut être calculée en Sievert.

Selon une onzième étape 11, chaque terminal utilisateur 130 affiche la valeur de débit de dose de radiations simulé et/ou la valeur de dose de radiation simulée sur l'écran d'affichage 136.

De cette manière, l'utilisateur peut surveiller la valeur de débit de dose de radiations et/ou la valeur de dose de radiation qu'il a reçues, comme si il se trouvait dans un environnement réel exposé à des radiations et/ou contaminé par des composants radioactifs.

Les étapes 5 à 11 sont répétées à intervalle de temps régulier, de sorte que la valeur de débit de dose de radiations simulé et/ou la valeur de dose de radiation simulée affichées sont mises à jour au cours de temps.

Selon une douzième étape 12, dans le cas où la valeur de débit de dose de radiations simulé dépasse la première valeur d'alarme prédéfinie, le microprocesseur 135 active l'alarme 137. Plus précisément, le microprocesseur 135 commande l'avertisseur sonore ou lumineux pour que l'avertisseur sonore ou lumineux émette un premier signal sonore ou un premier signal lumineux. Dans ce cas, l'utilisateur est averti qu'il doit s'éloigner de la source de radiation ou de la zone contaminée, de manière à faire diminuer la valeur de débit de dose simulée qu'il reçoit.

De même, dans le cas où la valeur de dose de radiation simulée dépasse la deuxième valeur d'alarme prédéfinie, le microprocesseur 135 active l'alarme 137. Plus précisément, le microprocesseur 135 commande l'avertisseur sonore ou lumineux pour que l'avertisseur sonore ou lumineux émette un deuxième signal sonore ou un deuxième signal lumineux. De préférence, le deuxième signal sonore ou le deuxième signal lumineux est différent du premier signal sonore ou du premier signal lumineux. Dans ce cas, l'utilisateur est averti qu'il a atteint la limite de la dose de radiation acceptable et qu'il doit interrompre sa tâche et sortir de la salle.

Les étapes 5 à 12 sont mises en oeuvre par chaque terminal utilisateur 130.

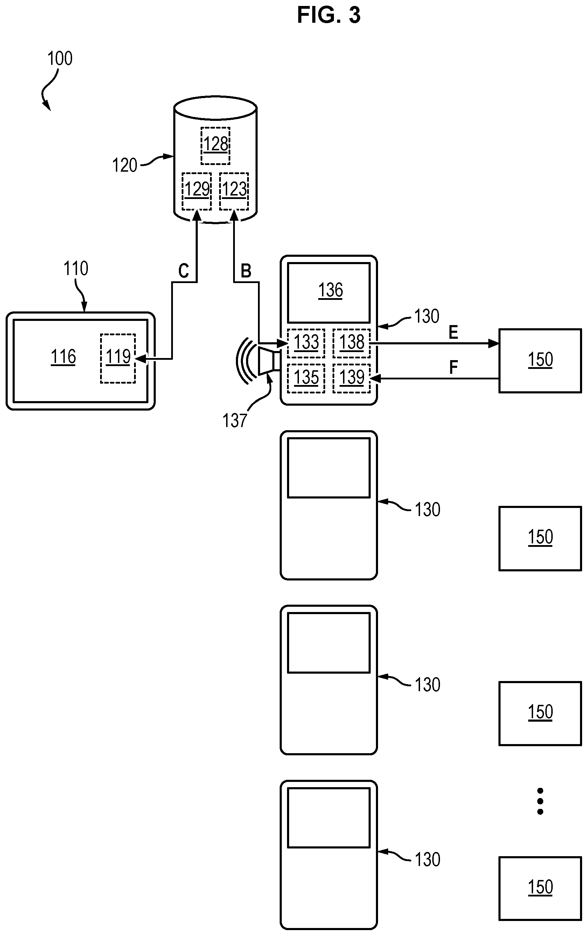

Sur la figure 3, le dispositif de simulation 100 représenté est identique au dispositif de simulation de la figure 1, excepté que chaque terminal utilisateur 130 est également destiné à simuler un contaminamètre (c'est-à-dire un appareil permettant de mesurer une contamination radioactive sur une surface donnée), en plus d'un dosimètre et d'un radiamètre.

A cet effet, le dispositif de simulation 100 comprend une pluralité de radio-étiquettes (« RFID tag » en anglais) 150. Les radio-étiquettes 150 sont distinctes des balises 140.

Les radio-étiquettes 150 peuvent être positionnées en différents endroits du local. Chaque radio-étiquette 150 est destinée à simuler une quantité de matière radioactive présente sur une surface. Chaque radio-étiquette 150 peut être fixée sur une surface, par exemple par collage.

Chaque terminal utilisateur 130 comprend un émetteur 138 propre à émettre un signal d'activation E à destination de la radio-étiquette 150, et un récepteur 139 propre à recevoir un signal d'identification F émis par la radio-étiquette 150 en réponse au signal d'activation E. Le signal d'identification F émis par la radio-étiquette 150 est un signal RFID. Le signal d'identification F émis par la radio-étiquette 150 est distinct du signal d'identification radiofréquence A émis par émis par l'émetteur radiofréquence 141 de la balise 140.

Chaque radio-étiquette 150 est propre à émettre un signal d'identification F contenant un identifiant de la radio-étiquette 150. L'identifiant peut être un code associé de manière univoque à la radio-étiquette 150. Autrement dit, chaque radio-étiquette 150 possède un identifiant unique, différent des identifiant des autres radio-étiquettes.

Le processeur 135 de chaque terminal utilisateur 130 est configuré pour déterminer une valeur de contamination, en fonction de l'identifiant de la radio-étiquette 140 détectée.

Le serveur 120 comprend une mémoire 128 dans laquelle sont stockées une pluralité de valeurs de contamination, chaque valeur de contamination étant attribuée à une surface contaminée simulée par l'une des radio-étiquettes 150. Plus précisément, la mémoire 128 contient les identifiants des différentes radio-étiquettes 150 et pour chaque identifiant, une valeur de contamination associée. La valeur de contamination peut être une valeur d'activité radioactive prédéfinie attribuée à la radio-étiquette 150. Par exemple, la valeur d'activité radioactive est un nombre de désintégration par unité de temps et par unité de surface. Dans ce cas, la valeur de contamination attribuée à chaque radio-étiquette 150 peut par exemple être définie en Becquerel par unité de surface.

La mémoire 128 du serveur 120 peut également contenir des valeurs d'alarme de contamination. De préférence, la mémoire 128 contient une troisième valeur d'alarme de contamination.

Le serveur 120 comprend en outre un émetteur radiofréquence 123, propre à émettre un signal radiofréquence de paramétrage B à destination des terminaux utilisateurs 130. Le signal radiofréquence de paramétrage B contient les valeurs de contamination attribuées aux différentes radio-étiquettes 150. Le signal de paramétrage B peut également comprendre une ou plusieurs valeurs d'alarme.

L'émetteur radiofréquence 123 du serveur 120 peut être propre à émettre le signal de paramétrage radiofréquence B selon le protocole de communication Wi-Fi ou Bluetooth.

Le serveur 120 comprend en outre un récepteur radiofréquence 129 propre à recevoir un signal radiofréquence C de mise à jour en provenance du terminal administrateur 110.

Le terminal administrateur 110 comprend une interface par laquelle l'administrateur peut saisir des paramètres de la simulation, tels que les

- les différentes valeurs de contamination attribuées aux différentes surfaces contaminées (c'est-à-dire aux différentes radio-étiquettes 150), et
- la ou les valeurs d'alarme de contamination.

Le terminal administrateur 110 comprend en outre un émetteur radiofréquence 119 propre à émettre le signal radiofréquence de mise à jour C à destination du serveur 120. Le signal radiofréquence de mise à jour C contient les paramètres de la simulation qui ont été saisis par l'administrateur.

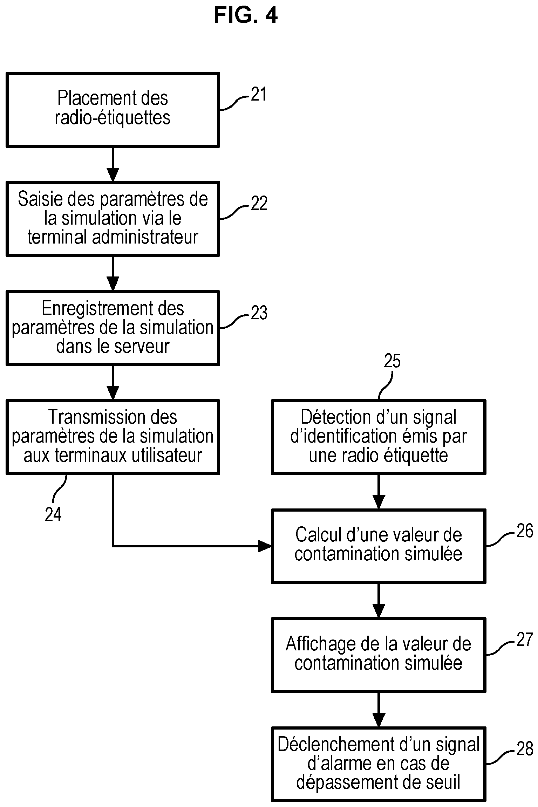

En référence à la figure 4, le procédé de simulation se déroule de la manière suivante.

Selon une première étape 21, l'administrateur dispose les radio-étiquettes 150 en différents endroits du local, et munit chaque utilisateur d'un terminal utilisateur 130.

Selon une deuxième étape 22, l'administrateur saisit les différents paramètres de la simulation au moyen du terminal administrateur 110. Par exemple, pour chaque radio-étiquette 150, l'administrateur saisit une valeur de contamination associée à la radio-étiquette 150, et pour chaque terminal utilisateur 130, l'administrateur saisit une valeur d'alarme de contamination. Les valeurs d'alarme de contamination peuvent être identiques pour tous les terminaux utilisateur 130.

Alternativement, les paramètres de la simulation peuvent être préenregistrés dans le terminal administrateur 110. Dans ce cas, l'administrateur se contente de valider ou de modifier les paramètres préenregistrés.

Alternativement, plusieurs jeux de paramètres possibles pour la simulation peuvent être préenregistrés dans le terminal administrateur 110. Dans ce cas, l'administrateur sélectionne un jeu de paramètres.

Selon une troisième étape 23, le terminal administrateur communique les paramètres de la simulation au serveur. A cet effet, le terminal administrateur émet un signal de mise à jour vers le serveur. Le serveur reçoit le signal de mise à jour et enregistre les paramètres de la simulation dans la mémoire.

Selon une quatrième étape 24, le serveur 120 émet un signal de paramétrage à destination des terminaux utilisateurs 130. Chaque terminal utilisateur 130 reçoit le signal de paramétrage contenant les paramètres de la simulation.

En parallèle, selon une cinquième étape 25, chaque utilisateur peut contrôler une surface à l'aide du terminal utilisateur 130. A cet effet, l'utilisateur approche le terminal utilisateur 130 de la surface à contrôler. Le terminal utilisateur 130 émet un signal d'activation. Si une radio-étiquette 150 se trouve à proximité du terminal utilisateur 130, le signal d'activation a pour effet d'activer la radio-étiquette 150. Lorsqu'elle est activée par le signal d'activation, la radio-étiquette 150 génère un signal d'identification en réponse au signal d'activation, le signal d'identification contenant un identifiant de la radio-étiquette.

Selon une sixième étape 26, chaque terminal utilisateur 130 détermine une valeur de contamination simulée en fonction de l'identifiant de la radio-étiquette 150.

Alternativement, la radio-étiquette 150 peut générer un signal d'identification en réponse au signal d'activation, le signal d'identification contenant directement la valeur de contamination simulée.

Selon une septième étape 27, le terminal utilisateur 130 affiche la valeur de contamination simulée sur l'écran d'affichage 136.

De cette manière, l'utilisateur peut détecter la présence de matière radioactive sur des surfaces, comme s'il se trouvait dans un environnement réel contaminé par des composants radioactifs.

Selon une huitième étape 28, dans le cas où la valeur de contamination dépasse la troisième valeur d'alarme prédéfinie, le microprocesseur 135 active l'alarme 137. Plus précisément, le microprocesseur 135 commande l'avertisseur sonore ou lumineux pour que l'avertisseur sonore ou lumineux émette un troisième signal sonore ou un troisième signal lumineux. Dans ce cas, l'utilisateur est averti qu'il est nécessaire de nettoyer la surface contaminée.

De préférence, le troisième signal sonore ou le troisième signal lumineux est différent du premier signal sonore ou du premier signal lumineux et différent du deuxième signal sonore ou du deuxième signal lumineux.

Les étapes 25 à 28 sont mises en oeuvre par chaque terminal utilisateur 130.

Les procédés de simulation illustrés sur les figures 2 et 4 peuvent être exécutés simultanément, afin de reproduire les conditions réelles de travail dans un environnement exposé à des radiations et/ou contaminé par des composants radioactifs. Dans ce cas, au début de la simulation, l'administrateur peut disposer à la fois les balises 140 et les radio-étiquettes 150 en différents endroits du local.

Chaque utilisateur est muni d'une terminal utilisateur 130 simulant un appareil de mesure individuel simulant un dosimètre, un radiamètre et un contaminamètre.

Afin que les signaux radiofréquence A émis par les balises 140 n'interfèrent pas avec les signaux d'identification F émis par les radio-étiquettes 150, le microprocesseur 135 de chaque terminal 130 peut être configuré pour calculer un bruit de fond en fonction de la distance entre le terminal 130 et la balise 140 et de la valeur de radiations attribuée à la balise 140 saisie par l'administrateur.

Le dispositif 100 proposé permet à un administrateur de modifier les paramètres de la simulation à tour moment, en saisissant les paramètres de la simulation via l'interface du terminal administrateur 110. Les paramètres de la simulation sont alors instantanément mis à jour dans la mémoire du serveur 120 et diffusés vers les terminaux utilisateurs 130.

## Revendications

1. Dispositif (100) de simulation d'un environnement exposé à des radiations et/ou contaminé par des composants radioactifs, comprenant :

   - une balise (140) destinée à simuler une source de radiations ou une zone contaminée, la balise (140) comprenant un émetteur radiofréquence (141) propre à émettre un signal d'identification radiofréquence (A) avec une première portée, le signal d'identification radiofréquence (A) contenant un identifiant de la balise, et un générateur de champ magnétique (142) propre à générer un champ magnétique avec une deuxième portée, inférieure à la première portée, le champ magnétique étant distinct du signal d'identification radiofréquence (A), et
   - un terminal utilisateur (130) destiné à simuler un appareil de mesure individuel, le terminal utilisateur (130) comprenant un récepteur radiofréquence (131) propre à recevoir le signal d'identification émis par l'émetteur (141), un détecteur de champ magnétique (132) propre à détecter le champ magnétique, et un microprocesseur (135) configuré pour calculer une distance entre le terminal utilisateur (130) et la balise (140) en fonction du signal d'identification reçu, et

   dans lequel le microprocesseur (135) est configuré pour :

   - comparer la distance calculée entre le terminal utilisateur (130) et la balise (140) avec un seuil prédéfini, et
   - si la distance calculée entre le terminal utilisateur (130) et la balise (140) est supérieure au seuil prédéfini, calculer une valeur de débit de dose de radiations simulé reçu par un utilisateur porteur de l'appareil de mesure individuel, en fonction d'une valeur de radiations attribuée à la source de radiations ou à la zone contaminée, et de la distance calculée entre le terminal utilisateur (130) et la balise (140), et
   - si la distance calculée entre le terminal utilisateur (130) et la balise (140) est inférieure ou égale au seuil prédéfini, calculer une valeur de débit de dose de radiations simulé reçu par l'utilisateur porteur de l'appareil de mesure individuel, en fonction du champ magnétique détecté par le détecteur de champ magnétique (132).

2. Dispositif selon la revendication 1, dans lequel, si la distance calculée entre le terminal utilisateur (130) et la balise (140) est supérieure au seuil prédéfini, le microprocesseur (135) calcule la valeur de débit de dose de radiations simulé comme inversement proportionnelle au carré de la distance entre le terminal utilisateur (130) et la balise (140).

3. Dispositif selon l'une des revendications 1 et 2, dans lequel, si la distance calculée entre le terminal utilisateur (130) et la balise (140) est inférieure ou égale au seuil prédéfini, le microprocesseur (135) calcule la valeur de débit de dose de radiations simulé, comme une première valeur constante prédéfinie.

4. Dispositif selon l'une des revendications 1 à 3, dans lequel, si la distance calculée entre le terminal utilisateur (130) et la balise (140) est nulle, le microprocesseur (135) calcule la valeur de débit de dose de radiations simulé, comme une deuxième valeur constante prédéfinie.

5. Dispositif selon l'une des revendications 1 à 4, dans lequel le signal d'identification radiofréquence (A) émis par l'émetteur radiofréquence (141) de la balise (140) est émis selon un protocole de communication Ultra Large Bande.

6. Dispositif selon l'une des revendications 1 à 5, comprenant en outre un serveur (120) comprenant une mémoire (128) dans laquelle est stockée la valeur de radiations attribuée à la source de radiations ou à la zone contaminée, et un émetteur radiofréquence (123), propre à émettre un signal radiofréquence de paramétrage (B) à destination du terminal utilisateur (130), le signal radiofréquence de paramétrage (B) contenant la valeur de radiations attribuée à la source de radiations ou à la zone contaminée.

7. Dispositif selon la revendication 6, comprenant un terminal administrateur (110) comprenant une interface par laquelle un administrateur peut saisir la valeur de radiation attribuée à la source de radiations ou à la zone contaminée, et un émetteur radiofréquence (119) propre à émettre un signal radiofréquence de mise à jour (C) à destination du serveur (120), le signal radiofréquence de mise à jour (C) contenant la valeur de radiations attribuée à la source de radiations ou à la zone contaminée, pour enregistrement dans la mémoire (128) du serveur (120).

8. Dispositif selon l'une des revendications 1 à 7, dans lequel le terminal utilisateur (130) comprend une horloge (134), et le microprocesseur (135) du terminal utilisateur (130) est configuré pour calculer une pluralité de valeurs de débit de dose de radiations simulé reçu par l'utilisateur, chaque valeur de débit de dose de radiations étant associée à un instant de mesure donné par l'horloge (134), et pour calculer une valeur de dose de radiation simulée reçue par l'utilisateur porteur de l'appareil de mesure individuel, en fonction des valeurs de débit de dose de radiations et des instants de mesure associés.

9. Dispositif selon l'une des revendications 1 à 8, comprenant une pluralité de balises (140) simulant une pluralité de sources de radiations ou de zones contaminées, chaque balise (140) comprenant un émetteur radiofréquence (141) propre à émettre un signal d'identification radiofréquence (A) identifiant la balise (140), et un générateur de champ magnétique (142) propre à générer un champ magnétique, et dans lequel le microprocesseur (135) est configuré pour calculer une distance entre le terminal utilisateur (130) et chaque balise (140) en fonction du signal d'identification (A) reçu de la balise (140), et pour calculer une valeur de débit de dose de radiations simulé totale reçu par l'utilisateur, comme une somme des valeurs de débit de dose de radiations simulé calculées pour les différentes balises (140).

10. Dispositif selon l'une des revendications 1 à 9, dans lequel le terminal utilisateur (130) comprend un écran d'affichage (136) et le microprocesseur (135) est configuré pour commander l'écran d'affichage (136) pour que l'écran d'affichage (136) affiche la valeur de débit de dose de radiations simulé et/ou la valeur de dose de radiation simulée reçu par l'utilisateur.

11. Dispositif selon l'une des revendications 1 à 10, dans lequel le terminal utilisateur (130) comprend une alarme (137) propre à émettre un signal d'alarme lorsque la valeur de débit de dose de radiations simulé et/ou la valeur de dose de radiation simulée reçu par l'utilisateur dépasse une valeur d'alarme prédéfinie.

12. Dispositif (100) selon l'une des revendications 1 à 11, comprenant en outre :

- une radio-étiquette (150) destinée à simuler une source de radiations ou une zone contaminée,

et dans lequel le terminal utilisateur (130) comprend un émetteur (138) propre à émettre un signal d'activation (E) à destination de la radio-étiquette (150), un récepteur (139) propre à recevoir un signal d'identification (F) émis par la radio-étiquette (150) en réponse au signal d'activation (E), le signal d'identification (F) contenant un identifiant de la radio-étiquette (150) ou une valeur de contamination associée à la radio-étiquette (150), et le microprocesseur (135) est configuré pour déterminer une valeur de contamination, en fonction de l'identifiant de la radio-étiquette (150).

13. Dispositif selon la revendication 12, dans lequel le signal d'identification (F) émis par la radio-étiquette (150) est un signal RFID.

14. Dispositif selon l'une des revendications 12 et 13, comprenant en outre un serveur (120) comprenant une mémoire (128) dans laquelle est stockée la valeur de contamination attribuée à la source de radiations ou à la zone contaminée, et un émetteur radiofréquence (123), propre à émettre un signal radiofréquence de paramétrage (B) à destination du terminal utilisateur (130), le signal radiofréquence de paramétrage (B) contenant la valeur de contamination attribuée à la source de radiations ou à la zone contaminée.

15. Dispositif selon la revendication 14, comprenant un terminal administrateur (110) comprenant une interface par laquelle un administrateur peut saisir la valeur de contamination attribuée à la source de radiations ou à la zone contaminée, et un émetteur radiofréquence (119) propre à émettre un signal radiofréquence de mise à jour (A) à destination du serveur (120), le signal radiofréquence de mise à jour (A) contenant la valeur de contamination attribuée à la source de radiations ou à la zone contaminée, pour enregistrement dans la mémoire (128) du serveur (120).

16. Dispositif selon l'une des revendications 12 à 15, comprenant une pluralité de radio-étiquettes (150) simulant une pluralité de sources de radiations ou de zones contaminées, chaque radio-étiquette (150) étant propre à émettre un signal d'identification (F) en réponse au signal d'activation (E) émis par le terminal utilisateur (130), le signal d'identification (F) contenant un identifiant de la radio-étiquette (150).

17. Dispositif selon l'une des revendications 12 à 16, dans lequel le terminal utilisateur (130) comprend un écran d'affichage (136) et le microprocesseur (135) est configuré pour commander l'écran d'affichage (136) pour que l'écran d'affichage (136) affiche la valeur de contamination attribuée à la source de radiations ou à la zone contaminée.

**Patentansprüche**

1. Vorrichtung (100) zur Simulation einer Strahlung ausgesetzten und/oder von radioaktiven Komponenten kontaminierten Umgebung, umfassend:

- eine Marke (140), die zum Simulieren einer Strahlungsquelle oder eines kontaminierten Bereichs bestimmt ist, wobei die Marke (140) einen Funkfrequenzsender (141) umfasst, der imstande ist, ein Funkfrequenz-Identifikationssignal (A) mit einer ersten Reichweite zu senden, wobei das Funkfrequenz-Identifikationssignal (A) eine Kennung der Marke enthält, und einen Magnetfeldgenerator (142), der imstande ist, ein Magnetfeld mit einer zweiten Reichweite zu erzeugen, die kleiner als die erste Reichweite ist, wobei das Magnetfeld vom Funkfrequenz-Identifikationssignal (A) unterschiedlich ist, und
- ein Benutzerendgerät (130), das zum Simulieren eines individuellen Messgeräts bestimmt ist, wobei das Benutzerendgerät (130) einen Funkfrequenzempfänger (131) umfasst, der imstande ist, das von dem Sender (141) gesendete Identifikationssignal zu empfangen, einen Magnetfelddetektor (132), der imstande ist, das Magnetfeld zu erfassen, und einen Mikroprozessor (135), der zur Berechnung eines Abstands zwischen dem Benutzerendgerät (130) und der Marke (140) in Abhängigkeit von dem empfangenen Identifikationssignal ausgelegt ist, und

wobei der Mikroprozessor (135) ausgelegt ist, um:

- den berechneten Abstand zwischen dem Benutzerendgerät (130) und der Marke (140) mit einem vordefinierten Schwellenwert zu vergleichen, und
- wenn der berechnete Abstand zwischen dem Benutzerendgerät (130) und der Marke (140) größer als der vordefinierte Schwellenwert ist, einen Wert für die simulierte Strahlendosisrate zu berechnen, die von einem Benutzer empfangen wird, der das individuelle Messgerät trägt, in Abhängigkeit von einem Strahlungswert, der der Strahlungsquelle oder dem kontaminierten Bereich zugewiesen ist, und von dem berechneten Abstand zwischen dem Benutzerendgerät (130) und der Marke (140), und
- wenn der berechnete Abstand zwischen dem Benutzerendgerät (130) und der Marke (140) kleiner oder gleich dem vordefinierten Schwellenwert ist, einen Wert für die simulierte Strahlungsdosisrate zu berechnen, die von dem Benutzer empfangen wird, der das individuelle Messgerät trägt, in Abhängigkeit von dem Magnetfeld, das von dem Magnetfelddetektor (132) erfasst wird.

2. Vorrichtung nach Anspruch 1, wobei, wenn der berechnete Abstand zwischen dem Benutzerendgerät (130) und der Marke (140) größer als der vordefinierte Schwellenwert ist, der Mikroprozessor (135) den Wert für die simulierte Strahlendosisrate als umgekehrt proportional zum Quadrat des Abstands zwischen dem Benutzerendgerät (130) und der Marke (140) berechnet.

3. Vorrichtung nach einem der Ansprüche 1 und 2, wobei, wenn der berechnete Abstand zwischen dem Benutzerendgerät (130) und der Marke (140) kleiner oder gleich dem vordefinierten Schwellenwert ist, der Mikroprozessor (135) den Wert für die simulierte Strahlendosisrate als einen ersten vordefinierten konstanten Wert berechnet.

4. Vorrichtung nach einem der Ansprüche 1 bis 3, wobei, wenn der berechnete Abstand zwischen dem Benutzerendgerät (130) und der Marke (140) null ist, der Mikroprozessor (135) den Wert für die simulierte Strahlungsdosisrate als einen zweiten vordefinierten konstanten Wert berechnet.

5. Vorrichtung nach einem der Ansprüche 1 bis 4, wobei das vom Funkfrequenzsender (141) der Marke (140) gesendete Funkfrequenz-Identifikationssignal (A) gemäß einem Ultra-Breitband-Kommunikationsprotokoll gesendet wird.

6. Vorrichtung nach einem der Ansprüche 1 bis 5, die ferner einen Server (120) umfasst, der einen Speicher (128) umfasst, in dem der der Strahlungsquelle oder dem kontaminierten Bereich zugewiesene Strahlungswert gespeichert ist, und einen Funkfrequenzsender (123), der imstande ist, ein Parametrierungs-Funkfrequenzsignal (B) an das Benutzerendgerät (130) zu senden, wobei das Parametrierungs-Funkfrequenzsignal (B) den der Strahlungsquelle oder dem kontaminierten Bereich zugewiesenen Strahlungswert enthält.

7. Vorrichtung nach Anspruch 6, die ein Administratorendgerät (110) umfasst, das eine Schnittstelle umfasst, über die ein Administrator den der Strahlungsquelle oder dem kontaminierten Bereich zugewiesenen Strahlungswert eingeben kann, und einen Funkfrequenzsender (119), der imstande ist, ein Aktualisierungs-Funkfrequenzsignal (C) an den Server (120) zu senden, wobei das Aktualisierungs-Funkfrequenzsignal (C) den der Strahlungsquelle oder dem kontaminierten Bereich zugewiesenen Strahlungswert zum Speichern im Speicher (128) des Servers (120) enthält.

8. Vorrichtung nach einem der Ansprüche 1 bis 7, wobei das Benutzerendgerät (130) einen Taktgeber (134) umfasst und der Mikroprozessor (135) des Benutzerendgeräts (130) ausgelegt ist, um eine Vielzahl von Werten für die simulierte Strahlendosisrate zu berechnen, die der Benutzer empfängt, wobei jeder Strahlendosisratenwert einem durch den Taktgeber (134) gegebenen Messzeitpunkt zugewiesen ist, und um einen simulierten Strahlendosiswert zu berechnen, den der Benutzer, der das individuelle Messgerät trägt, in Abhängigkeit von den Werten für die Strahlendosisrate und den zugewiesenen Messzeitpunkten empfängt.

9. Vorrichtung nach einem der Ansprüche 1 bis 8, die eine Vielzahl von Marken (140) umfasst, die eine Vielzahl von Strahlungsquellen oder kontaminierten Bereichen simulieren, wobei jede Marke (140) einen Funkfrequenzsender (141) umfasst, der imstande ist, ein die Marke (140) identifizierendes Funkfrequenz-Identifikationssignal (A) zu senden, und einen Magnetfeldgenerator (142), der imstande ist, ein Magnetfeld zu erzeugen, und wobei der Mikroprozessor (135) ausgelegt ist, um einen Abstand zwischen dem Benutzerendgerät (130) und jeder Marke (140) in Abhängigkeit von dem von der Marke (140) empfangenen Identifikationssignal (A) zu berechnen, und um einen Gesamtwert für die simulierte Strahlungsdosisrate, die der Benutzer empfängt, als eine Summe der Werte für die simulierte Strahlungsdosisrate, die für die verschiedenen Marken (140) berechnet wurden, zu berechnen.

10. Vorrichtung nach einem der Ansprüche 1 bis 9, wobei das Benutzerendgerät (130) einen Anzeigebildschirm (136) umfasst und der Mikroprozessor (135) ausgelegt ist, um den Anzeigebildschirm (136) zu steuern, damit der Anzeigebildschirm (136) den Wert für die simulierte Strahlendosisrate und/oder den Wert für die simulierte Strahlendosis, die der Benutzer empfängt, anzeigt.

11. Vorrichtung nach einem der Ansprüche 1 bis 10, wobei das Benutzerendgerät (130) einen Alarm (137) umfasst, der imstande ist, ein Alarmsignal zu senden, wenn der Wert für die simulierte Strahlendosisrate und/oder der Wert für die simulierte Strahlendosis, die der Benutzer empfängt, einen vordefinierten Alarmwert überschreitet.

12. Vorrichtung (100) nach einem der Ansprüche 1 bis 11, die ferner umfasst:

    - ein Funketikett (150), das zum Simulieren einer Strahlungsquelle oder eines kontaminierten Bereichs bestimmt ist,

    und wobei das Benutzerendgerät (130) einen Sender (138) umfasst, der imstande ist, ein Aktivierungssignal (E) an das Funketikett (150) zu senden, einen Empfänger (139), der imstande ist, ein Identifikationssignal (F) zu empfangen, das von dem Funketikett (150) als Reaktion auf das Aktivierungssignal (E) gesendet wird, wobei das Identifikationssignal (F) eine Kennung des Funketiketts (150) oder einen dem Funketikett (150) zugewiesenen Kontaminationswert enthält, und der Mikroprozessor (135) ausgelegt ist, um einen Kontaminationswert in Abhängigkeit der Kennung des Funketiketts (150) zu bestimmen.

13. Vorrichtung nach Anspruch 12, wobei das von dem Funketikett (150) gesendete Identifikationssignal (F) ein RFID-Signal ist.

14. Vorrichtung nach einem der Ansprüche 12 und 13, die ferner einen Server (120) umfasst, der einen Speicher (128) umfasst, in dem der der Strahlungsquelle oder dem kontaminierten Bereich zugewiesene Kontaminationswert gespeichert ist, und einen Funkfrequenzsender (123), der imstande ist, ein Parametrierungs-Funkfrequenzsignal (B) an das Benutzerendgerät (130) zu senden, wobei das Parametrierungs-Funkfrequenzsignal (B) den der Strahlungsquelle oder dem kontaminierten Bereich zugewiesenen Kontaminationswert enthält.

15. Vorrichtung nach Anspruch 14, die ein Administratorendgerät (110) umfasst, das eine Schnittstelle umfasst, über die ein Administrator den der Strahlungsquelle oder dem kontaminierten Bereich zugewiesenen Kontaminationswert eingeben kann, und einen Funkfrequenzsender (119), der imstande ist, ein Aktualisierungs-Funkfrequenzsignal (A) an den Server (120) zu senden, wobei das Aktualisierungs-Funkfrequenzsignal (A) den der Strahlungsquelle oder dem kontaminierten Bereich zugewiesenen Kontaminationswert enthält, zum Speichern im Speicher (128) des Servers (120).

16. Vorrichtung nach einem der Ansprüche 12 bis 15, die eine Vielzahl von Funketiketten (150) umfasst, die eine Vielzahl von Strahlungsquellen oder kontaminierten Bereichen simulieren, wobei jedes Funketikett (150) imstande ist, ein Identifikationssignal (F) als Reaktion auf das von dem Benutzerendgerät (130) gesendete Aktivierungssignal (E) zu senden, wobei das Identifikationssignal (F) eine Kennung des Funketiketts (150) enthält.

17. Vorrichtung nach einem der Ansprüche 12 bis 16, wobei das Benutzerendgerät (130) einen Anzeigebildschirm (136) umfasst und der Mikroprozessor (135) ausgelegt ist, um den Anzeigebildschirm (136) zu steuern, damit der Anzeigebildschirm (136) den der Strahlungsquelle oder dem kontaminierten Bereich zugewiesenen Kontaminationswert anzeigt.

**Claims**

1. Device (100) for simulating an environment exposed to radiation and/or contaminated by radioactive components, comprising :

   - a beacon (140) intended to simulate a source of radiation or a contaminated zone, the beacon (140) comprising a radio frequency transmitter (141) able to transmit a radio frequency identification signal (A) with a first range, the radio frequency identification signal (A) containing an identifier of the beacon, and a magnetic field generator (142) able to generate a magnetic field with a second range, less than the first range, the magnetic field being distinct from the radio frequency identification signal (A), and
   - a user terminal (130) for simulating a personal measurement device, the user terminal (130) comprising a radio frequency receiver (131) adapted to receive the identification signal transmitted by the transmitter (141), a magnetic field detector (132) adapted to detect the magnetic field, and a microprocessor (135) configured to calculate a distance between the user terminal (130) and the beacon (140) as a function of the received identification signal, and

   wherein the microprocessor (135) is configured to :

   - compare the distance calculated between the user terminal (130) and the beacon (140) with a predefined threshold, and

   - if the calculated distance between the user terminal (130) and the beacon (140) is greater than the predefined threshold, calculating a simulated radiation dose rate value received by a user wearing the personal measuring device, as a function of a radiation value assigned to the radiation source or contaminated area, and the calculated distance between the user terminal (130) and the beacon (140), and
   - if the calculated distance between the user terminal (130) and the beacon (140) is less than or equal to the predefined threshold, calculating a simulated radiation dose rate value received by the user wearing the personal measurement device, as a function of the magnetic field detected by the magnetic field detector (132).

2. A device according to claim 1, wherein if the calculated distance between the user terminal (130) and the beacon (140) is greater than the predefined threshold, the microprocessor (135) calculates the simulated radiation dose rate value as inversely proportional to the square of the distance between the user terminal (130) and the beacon (140).

3. Device according to one of claims 1 and 2, wherein if the distance calculated between the user terminal (130) and the beacon (140) is less than or equal to the predefined threshold, the microprocessor (135) calculates the simulated radiation dose rate value as a first predefined constant value.

4. Device according to one of claims 1 to 3, wherein if the calculated distance between the user terminal (130) and the beacon (140) is zero, the microprocessor (135) calculates the simulated radiation dose rate value as a second predefined constant value.

5. Device according to one of claims 1 to 4, wherein the radio frequency identification signal (A) transmitted by the radio frequency transmitter (141) of the beacon (140) is transmitted according to an Ultra Wide Band communication protocol.

6. Device according to one of claims 1 to 5, further comprising a server (120) comprising a memory (128) in which is stored the radiation value assigned to the radiation source or to the contaminated area, and a radio frequency transmitter (123), capable of transmitting a parameter-setting radio frequency signal (B) to the user terminal (130), the parameter-setting radio frequency signal (B) containing the radiation value assigned to the radiation source or to the contaminated area.

7. Device according to claim 6, comprising an administrator terminal (110) comprising an interface via which an administrator can enter the radiation value assigned to the radiation source or to the contaminated area, and a radio frequency transmitter (119) suitable for transmitting an update radio frequency signal (C) to the server (120), the update radio frequency signal (C) containing the radiation value assigned to the radiation source or to the contaminated area, for recording in the memory (128) of the server (120).

8. Device according to one of claims 1 to 7, in which the user terminal (130) comprises a clock (134), and the microprocessor (135) of the user terminal (130) is configured to calculate a plurality of simulated radiation dose rate values received by the user, each radiation dose rate value being associated with a measurement time given by the clock (134), and for calculating a simulated radiation dose value received by the user carrying the personal measurement device, as a function of the radiation dose rate values and the associated measurement times.

9. Device according to one of claims 1 to 8, comprising a plurality of beacons (140) simulating a plurality of sources of radiation or contaminated areas, each beacon (140) comprising a radio-frequency transmitter (141) suitable for transmitting a radio-frequency identification signal (A) identifying the beacon (140), and a magnetic field generator (142) suitable for generating a magnetic field, and wherein the microprocessor (135) is configured to calculate a distance between the user terminal (130) and each beacon (140) as a function of the identification signal (A) received from the beacon (140), and to calculate a total simulated radiation dose rate value received by the user, as a sum of the simulated radiation dose rate values calculated for the different beacons (140).

10. A device according to any of claims 1 to 9, wherein the user terminal (130) comprises a display screen (136) and the microprocessor (135) is configured to control the display screen (136) so that the display screen (136) displays the simulated radiation dose rate value and/or the simulated radiation dose value received by the user.

11. Device according to one of claims 1 to 10, in which the user terminal (130) comprises an alarm (137) capable of emitting an alarm signal when the simulated radiation dose rate value and/or the simulated radiation dose value received by the user exceeds a predefined alarm value.

12. Device (100) according to one of claims 1 to 11, further comprising :

- a radio tag (150) intended to simulate a source of radiation or a contaminated area, and in which the user terminal (130) comprises a transmitter (138) suitable for transmitting an activation signal (E) to the radio tag (150), a receiver (139) suitable for receiving an identification signal (F) transmitted by the radio tag (150) in response to the activation signal (E), the identification signal (F) containing an identifier of the radio tag (150) or a contamination value associated with the radio tag (150), and the microprocessor (135) is configured to determine a contamination value as a function of the identifier of the radio tag (150).

13. A device as claimed in claim 12, wherein the identification signal (F) emitted by the radio tag (150) is an RFID signal.

14. Device according to one of claims 12 and 13, further comprising a server (120) comprising a memory (128) in which is stored the contamination value assigned to the radiation source or to the contaminated zone, and a radio-frequency transmitter (123), suitable for transmitting a parameter-setting radio-frequency signal (B) to the user terminal (130), the parameter-setting radio-frequency signal (B) containing the contamination value assigned to the radiation source or to the contaminated zone.

15. Device according to claim 14, comprising an administrator terminal (110) comprising an interface via which an administrator can enter the contamination value assigned to the radiation source or to the contaminated area, and a radio-frequency transmitter (119) suitable for transmitting an update radio-frequency signal (A) to the server (120), the update radio-frequency signal (A) containing the contamination value assigned to the radiation source or to the contaminated area, for recording in the memory (128) of the server (120).

16. Device according to one of claims 12 to 15, comprising a plurality of radio tags (150) simulating a plurality of radiation sources or contaminated areas, each radio tag (150) being capable of emitting an identification signal (F) in response to the activation signal (E) emitted by the user terminal (130), the identification signal (F) containing an identifier of the radio tag (150).

17. A device according to any of claims 12 to 16, wherein the user terminal (130) comprises a display screen (136) and the microprocessor (135) is configured to control the display screen (136) so that the display screen (136) displays the contamination value attributed to the radiation source or to the contaminated area.

# FIG. 1

# FIG. 2

```
┌─────────────────────────────┐
│   Placement des balises      │──1
└─────────────────────────────┘
              │
              ▼
┌─────────────────────────────┐
│  Saisie des paramètres de    │──2
│  la simulation via le        │
│  terminal administrateur     │
└─────────────────────────────┘
              │
              ▼
┌─────────────────────────────┐
│  Enregistrement des          │──3
│  paramètres de la simulation │
│  dans le serveur             │
└─────────────────────────────┘
              │
              ▼
┌─────────────────────────────┐      ┌─────────────────────────────┐      ┌─────────────────────────────┐
│  Transmission des            │      │  Détection des signaux       │──5   │  Détection d'un champ        │──8
│  paramètres de la simulation │      │  d'identification émis par   │      │  magnétique généré par       │
│  aux terminaux utilisateur   │      │  les balises                 │      │  une balise                  │
└─────────────────────────────┘      └─────────────────────────────┘      └─────────────────────────────┘
              │    4                              │                                      │
              │                                   ▼                                      │
              │                   ┌─────────────────────────────┐                        │
              └──────────────────▶│  Calcul de la distance       │──6                     │
                                  │  entre le terminal           │                        │
                                  │  utilisateur et chaque balise│                        │
                                  └─────────────────────────────┘                        │
                                               │                                         │
                                               ▼                                         │
                                  ┌─────────────────────────────┐                        │
                                  │  Comparaison de la           │──7                     │
                                  │  distance calculée           │◀───────────────────────┘
                                  │  avec un seuil               │
                                  └─────────────────────────────┘
                                               │
                                               ▼
                                  ┌─────────────────────────────┐
                                  │  Calcul d'une valeur de      │──9
                                  │  débit de dose de            │
                                  │  radiations simulée          │
                                  └─────────────────────────────┘
                                               │
                                               ▼
                                  ┌─────────────────────────────┐
                                  │  Calcul d'une valeur de      │──10
                                  │  dose de radiations          │
                                  │  simulée                     │
                                  └─────────────────────────────┘
                                               │
                                               ▼
                                  ┌─────────────────────────────┐
                                  │  Affichage des valeurs de    │──11
                                  │  débit de dose de radiation  │
                                  │  simulé et de dose de        │
                                  │  radiation simulée           │
                                  └─────────────────────────────┘
                                               │
                                               ▼
                                  ┌─────────────────────────────┐
                                  │  Déclenchement d'un signal   │──12
                                  │  d'alarme en cas de          │
                                  │  dépassement de seuil        │
                                  └─────────────────────────────┘
```

## FIG. 3

# FIG. 4

Placement des
radio-étiquettes — 21

Saisie des paramètres de
la simulation via le
terminal administrateur — 22

Enregistrement des
paramètres de la simulation
dans le serveur — 23

Transmission des
paramètres de la simulation
aux terminaux utilisateur

24

Détection d'un signal
d'identification émis par
une radio étiquette — 25

Calcul d'une valeur de
contamination simulée — 26

Affichage de la valeur de
contamination simulée — 27

Déclenchement d'un signal
d'alarme en cas de
dépassement de seuil — 28

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019101658 A1